# EUROPÄISCHE PATENTSCHRIFT

(11) **EP 1 740 642 B1**
(45) Veröffentlichungstag und Bekanntmachung des Hinweises auf die Patenterteilung: **27.06.2007**
(21) Anmeldenummer: 05735033.2
(22) Anmeldetag: 21.04.2005
(51) Int. Cl.: C08G 77/458, C08G 18/61

(54) **VERFAHREN ZUR HERSTELLUNG VON SILOXAN-COPOLYMEREN**
METHOD FOR PRODUCING SILOXANE COPOLYMERS
PROCEDE POUR PRODUIRE DES COPOLYMERES DE SILOXANE

(30) Priorität: 27.04.2004 DE 102004020563
(43) Veröffentlichungstag der Anmeldung: 10.01.2007
(73) Patentinhaber: Wacker Chemie AG, 81737 München (DE)
(72) Erfinder: ZICHE, Wolfgang, 84489 Burghausen (DE)
(74) Vertreter: Budczinski, Angelika
(86) Internationale Anmeldenummer: PCT/EP2005/004300
(87) Internationale Veröffentlichungsnummer: WO 2005/105895

(56) Entgegenhaltungen:
- EP-A- 1 489 129
- WO-A-95/21206
- WO-A-02/077072

## Beschreibung

Die Erfindung betrifft ein Verfahren zur Herstellung von Siloxan-Copolymeren.

Die Herstellung von Copolymeren und Blockcopolymeren ist bereits bekannt. Die Umsetzung von Alkoxysilanen mit silanolterminierten Siloxanen zu alkoxysilylterminierten Siloxanen, die häufig in vernetzbaren Massen eingesetzt werden, ist ebenfalls bekannt, wie z.B. in US-A 6,265,598 und EP-A 137 883 beschrieben. Die Tatsache, dass Monoalkoxysilylgruppen in Vernetzungsreaktionen nicht reaktiv sind, wird z.B. ausgenutzt um eine gewünschte Untervernetzung zu erreichen. Hierzu soll beispielsweise auf EP-A 1 006 146 verwiesen werden.

Gegenstand der Erfindung ist ein Verfahren zur Herstellung von Siloxan-Copolymeren, dadurch gekennzeichnet, dass
in einem ersten Schritt
ein Organyloxysilan der Formel

R⁷O-SiR¹ ₂-R⁶-NHR² (I)

mit einem Isocyanat der Formel

R³(NCO)ₓ (II)

zu einer Harnstoffverbindung der Formel

R³(NH-(C=O)-NR²-R⁶-SiR¹ ₂-OR⁷)ₓ (III)

umgesetzt wird, wobei
R¹ gleich oder verschieden sein kann und einen einwertigen, gegebenenfalls substituierten Kohlenwasserstoffrest bedeutet, der mit Heteroatomen unterbrochen sein kann,
R² Wasserstoffatom oder einen einwertigen, gegebenenfalls substituierten Kohlenwasserstoffrest bedeutet, der mit Heteroatomen unterbrochen sein kann,
R³ einen mehrwertigen, gegebenenfalls substituierten Kohlenwasserstoffrest bedeutet, der mit Heteroatomen unterbrochen sein kann,
R⁶ einen zweiwertigen Kohlenwasserstoffrest bedeutet, der mit Heteroatomen unterbrochen sein kann,
R⁷ einen einwertigen, gegebenenfalls substituierten Kohlenwasserstoffrest bedeutet, der mit Heteroatomen unterbrochen sein kann,
x eine ganze Zahl größer 1 bedeutet, bevorzugt 2 oder 3, besonders bevorzugt 2,
gegebenenfalls in einem zweiten Schritt
die Harnstoffverbindung der Formel (III) mit Wasser umgesetzt wird und
in einem dritten Schritt
Harnstoffverbindung der Formel (III) und/oder deren Umsetzungsprodukt erhalten aus dem zweiten Schritt mit einer silanolterminierten Verbindung der Formel

R⁵(SiR⁴ ₂-OH)_{y} (IV)

zu Copolymeren umgesetzt wird,
wobei
R⁴ gleich oder verschieden sein kann und eine für R¹ angegebene Bedeutung hat,
R⁵ einen mehrwertigen Polyetherrest, Polyesterrest oder Polysiloxanrest bedeutet und
y eine ganze Zahl größer 1, bevorzugt 2 oder 3, besonders bevorzugt 2, ist.

Beispiele für Rest R¹ sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Alkenylreste, wie der Vinyl-, 5-Hexenyl-, Cyclohexenyl-, 1-Propenyl-, Allyl-, 3-Butenyl- und 4-Pentenylrest; Alkinylreste, wie der Ethinyl-, Propargyl- und 1-Propinylrest; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R¹ sind Halogenalkylreste, wie der 3,3,3-Trifluor-n-propylrest, der 2,2,2,2',2',2'-Hexafluor-isopropylrest, der Heptafluorisopropylrest und Halogenarylreste, wie der o-, m- und p-Chlorphenylrest, sowie alle für R¹ oben genannten Reste, die vorzugsweise mit Mercaptogruppen, epoxyfunktionellen Gruppen, Carboxygruppen, Ketogruppen, Enamingruppen, Aminogruppen, Aminoethylaminogruppen, Aryloxygruppen, Acryloxygruppen, Methacryloxygruppen, Hydroxygruppen und Halogengruppen substituiert sein können.

Bevorzugt handelt es sich bei Rest R¹ um gegebenenfalls mit Fluor oder Chlor substituierte Kohlenwasserstoffreste mit 1 bis 12 Kohlenstoffatomen, besonders bevorzugt um Kohlenwasserstoffreste mit 1 bis 3 Kohlenstoffatomen, insbesondere um den Methylrest.

Beispiele für Rest R² sind die für Rest R¹ oben angegebenen Beispiele.

Bevorzugt handelt es sich bei Rest R² um Wasserstoffatom oder gegebenenfalls mit Aminogruppen substituierte Kohlenwasserstoffreste mit 1 bis 12 Kohlenstoffatomen, besonders bevorzugt um Wasserstoffatom oder Kohlenwasserstoffreste mit 1 bis 6 Kohlenstoffatomen, insbesondere um Wasserstoffatom.

Beispiele für Rest R³ sind der Hexylenrest, 4,4'-Methylendicyclohexylenrest, 4,4'-Methylendiphenylenrest, 1,3-Diazetidine-2,4-dion-bis(4,4'-methylendicyclohexyl)enrest, Isocyanurat-tris(4,4'-methylendicyclohexyl)enrest, 1,3-Diazetidine-2,4-dion-bis(4,4'-methylendiphenyl)enrest, Isocyanurat-tris(4,4'-methylendiphenyl)enrest sowie Isophoronylenrest.

Bevorzugt handelt es sich bei Rest R³ um zwei- oder dreiwertige Kohlenwasserstoffreste mit 1 bis 24 Kohlenstoffatomen, die mit Heteroatomen unterbrochen sein können, besonders bevorzugt um den zweiwertigen Hexylenrest, 4,4'-Methylendicyclohexylenrest, 4,4'-Methylendiphenylenrest und Isophoronylenrest, insbesondere um 4,4'-Methylendicyclohexylenrest und Isophoronylenrest.

Beispiele für zweiwertige Reste R⁶ sind Alkylenreste, wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, wie der n-Hexylenrest, Heptylenreste, wie der n-Heptylenrest, Octylenreste, wie der n-Octylenrest und iso-Octylenreste, wie der 2,2,4-Trimethylpentylenrest, Nonylenreste, wie der n-Nonylenrest, Decylenreste, wie der n-Decylenrest, Dodecylenreste, wie der n-Dodecylenrest; Alkenylenreste, wie der Vinylen- und der Allylenrest; Cycloalkylenreste, wie Cyclopentylen-, Cyclohexylen-, Cycloheptylenreste und Methylcyclohexylenreste: Arylenreste, wie der Phenylen- und der Naphthylenrest; Alkarylenreste, wie o-, m-, p-Tolylenreste, Xylylenreste und Ethylphenylenreste; Aralkylenreste, wie der Benzylenrest, der α- und der β-Phenylethylenrest.

Bevorzugt handelt es sich bei Rest R⁶ um zweiwertige Kohlenwasserstoffreste mit 1 bis 12 Kohlenstoffatomen, besonders bevorzugt um zweiwertige Kohlenwasserstoffreste mit 1 bis 3 Kohlenstoffatomen, insbesondere um den Methylen- und den Propylenrest, ganz besonders bevorzugt um den Methylenrest.

Beispiele für Reste R⁷ sind die für Rest R¹ angegebenen Beispiele sowie Reste R-C=O- mit R gleich einwertigem Kohlenwasserstoffrest, wie z.B. H₃CC=O-, und Reste R'R''C=N- mit R' gleich einwertigem Kohlenwasserstoffrest und R" gleich einwertigem Kohlenwasserstoffrest, wie z.B. (H₃C-CH₂) (H₃C)C=N-.

Beispiele für R, R' und R" sind unabhängig voneinander die für Rest R¹ angegebenen Kohlenwasserstoffreste, wobei der Methyl- und der Ethylrest besonders bevorzugt sind.

Bevorzugt handelt es sich bei Rest R⁷ um gegebenenfalls mit Alkoxyresten substituierte Kohlenwasserstoffreste mit 1 bis 12 Kohlenstoffatomen, besonders bevorzugt um Kohlenwasserstoffreste mit 1 bis 3 Kohlenstoffatomen, insbesondere um den Methylrest.

Beispiele und bevorzugte Bereiche für Rest R⁴ sind die für Rest R¹ angegebenen Beispiele und bevorzugten Bereiche.

Beispiele für mehrwertige Reste R⁵ sind zweiwertige, dreiwertige und vierwertige Polypropylenglykolreste, Polyethylenglykolreste, Polysiloxanreste, Polybutadienreste, Polyisoprenreste, Polyharnstoffreste und Polyurethanreste.

Bevorzugt handelt es sich bei Rest R⁵ um zweiwertige Polyether- oder Polysiloxanrest, besonders bevorzugt um zweiwertige Polysiloxanreste.

Beispiele der erfindungsgemäß eingesetzten Silane der Formel (I) sind H₃C-O-CH₂-CH₂-O-Si (CH₃)₂-(CH₂)₃-NH₂, H₃C-O-CH₂-CH₂-O-Si (CH₃)₂-(CH₂)-NH₂, H₃C-O-CH₂-CH₂-O-Si (CH₃)₂-(CH₂)₃-NH(C₆H₁₁), H₃C-O-CH₂-CH₂-O-Si(CH₃)₂-(CH₂)-NH (C₆H₁₁), H₃C-O-Si(CH₃)₂-(CH₂)₃-NH₂, H₃C-O-Si (CH₃)₂-(CH₂)-NH₂, H₃C-O-Si (CH₃)₂-(CH₂)₃-NH(C₆H₁₁), H₃C-O-Si (CH₃)₂-(CH₂)-NH(C₆H₁₁), H₃C-C=O-O-CH₂-CH₂-O-Si(CH₃)₂-(CH₂)₃-NH₂, H₃C-C=O-O-CH₂-CH₂-O-Si (CH₃)₂-(CH₂)-NH₂, H₃C-C=O-O-CH₂-CH₂-O-Si(CH₃)₂-(CH₂)₃-NH(C₆H₁₁), H₃C-C=O-O-CH₂-CH₂-O-Si(CH₃)₂-(CH₂)-NH (C₆H₁₁), (H₃C)(H₃C-CH₂)-C=N-O-Si(CH₃)₂-(CH₂)₃-NH₂, (H₃C)(H₃C-CH₂)-C=N-0-Si(CH₃)₂-(CH₂)-NH₂, (H₃C)(H₃C-CH₂)-C=N-O-Si(CH₃)₂-(CH₂)₃-NH(C₆H₁₁) und (H₃C)(H₃C-CH₂)-C=N-O-Si(CH₃)₂-(CH₂)-NH(C₆H₁₁), wobei H₃C-O-Si(CH₃)₂-(CH₂)₃-NH₂, H₃C-O-Si(CH₃)₂-(CH₂)-NH₂, H₃C-O-Si(CH₃)₂-(CH₂)₃-NH(C₆H₁₁) und H₃C-O-Si(CH₃)₂-(CH₂)-NH (C₆H₁₁) bevorzugt sowie CH₃-O-Si(CH₃)₂-(CH₂)-NH₂ und H₃C-O-Si(CH₃)₂-(CH₂)-NH(C₆H₁₁) besonders bevorzugt sind.

Beispiele der erfindungsgemäß eingesetzten Isocyanate der Formel (II) sind Hexylendiisocyanat, 4,4'-Methylendicyclohexylendiisocyanat, 4,4'-Methylendiphenylendiisocyanat, 1,3-Diazetidine-2,4-dion-bis(4,4'-methylendicyclohexyl)diisocyanat, Isocyanurat-tris(4,4'-methylendicyclohexyl)triisocyanat, 1,3-Diazetidine-2,4-dion-bis(4,4'-methylendiphenyl)diisocyanat, Isocyanurat-tris(4,4'-methylendiphenyl)triisocyanat und Isophorondiisocyanat, wobei Hexylendiisocyanat, 4,4'-Methylendicyclohexylendiisocyanat, 4,4'-Methylendiphenylendiisocyanat und Isophorondiisocyanat bevorzugt sowie Hexylendiisocyanat, 4,4'-Methylendicyclohexylendiisocyanat und Isophorondiisocyanat besonders bevorzugt sind.

Im ersten Schritt des erfindungsgemäßen Verfahrens wird Isocyanat der Formel (II) in Mengen von bevorzugt 0,9 bis 1,1, besonders bevorzugt 0,98 bis 1,02, Moläquivalenten Isocyanatgruppen zu Amingruppen des Silans der Formel (I) eingesetzt.

Im ersten Schritt des erfindungsgemäßen Verfahrens wird Isocyanat der Formel (II) mit Silan der Formel (I) auf beliebige und bisher bekannte Art und Weise miteinander vermischt und reagieren gelassen. Falls erwünscht kann polares organisches Lösemittel eingesetzt werden, was jedoch nicht bevorzugt ist.

Beispiele für gegebenenfalls eingesetzte polare Lösungsmittel sind Dimethylformamid, Isopropanol, Tertrahydrofuran, Dioxan und Dimethylsulfoxid.

Die erfindungsgemäße Umsetzung in der ersten Stufe erfolgt bevorzugt bei einer Temperatur von 0 bis 80°C, besonders bevorzugt bei 40 bis 70°C, und bei einem Druck der umgebenden Atmosphäre, also zwischen 900 und 1100 hPa.

Der erste Schritt des erfindungsgemäßen Verfahrens wird bevorzugt unter Ausschluss von Feuchtigkeit durchgeführt.

Im gegebenenfalls durchgeführten zweiten Schritt des erfindungsgemäßen Verfahrens wird die im ersten Schritt erhaltene Harnstoffverbindung der Formel (III) mit Wasser bevorzugt in stöchiometrischem Verhältnis zu der Menge der hydrolysierbaren Gruppen oder im Überschuss unter Freisetzung von Verbindung R⁷OH mit R⁷ gleich der obengenannten Bedeutung umgesetzt. Falls erwünscht kann die entstandene Verbindung R⁷OH durch Destillation, bevorzugt im Vakuum, aus dem Reaktionsgemisch entfernt werden.

Im zweiten Schritt des erfindungsgemäßen Verfahrens wird die im ersten Schritt erhaltene Reaktionsmischung mit Wasser auf beliebige und bisher bekannte Art und Weise vermischt und reagieren gelassen. Das im ersten Verfahrensschritt gegebenenfalls verwendete Lösemittel muss dabei nicht vorher entfernt werden.

Die Hydrolyse des erfindungsgemäßen zweiten Schrittes kann mit Hilfe von dem Fachmann bekannten sauren oder basischen Katalysatoren, wie Ameisensäure oder Ammoniumhydroxid, durchgeführt werden. Bevorzugt wird bei der erfindungsgemäßen Hydrolyse kein Katalysator verwendet.

Die erfindungsgemäße Hydrolyse in der zweiten Stufe erfolgt bevorzugt bei einer Temperatur von 0 bis 80°C, besonders bevorzugt bei 40 bis 70°C, und bei einem Druck der umgebenden Atmosphäre, also zwischen 900 und 1100 hPa.

Beispiele für Verbindungen der Formel (IV) sind
[(O-CH₂-CH(CH₃)O)ₙ]((CH₂)₃Si(CH₃)₂-OH)₂ mit einem Zahlenmittel Mₙ von ca. 500 bis 30000,
[(O-CH₂-CH₂O)ₙ]((CH₂)₃Si(CH₃)₂-OH)₂ mit einem Zahlenmittel Mₙ von ca. 500 bis 30000,
[(O-CH₂-CH(CH₃)O)ₙ] ((CH₂)Si(CH₃)₂-OH)₂ mit einem Zahlenmittel Mₙ von ca. 500 bis 30000,
[(O-CH₂-CH₂O)ₙ]((CH₂)Si(CH₃)₂-OH)₂ mit einem Zahlenmittel Mₙ von ca. 500 bis 30000,
[O-CH₂-CH(CH₃)O-C=O-NH-(C₆H₁₀-C(CH₃)₂-C₆H₁₀)ₙ-NH-C=O-]ₙ((CH₂)₃Si-(CH₃)₂-OH)₂ mit einem Zahlenmittel Mₙ von ca. 1000 bis 300000,
[O-CH₂-CH₂O-C=O-NH-(C₆H₁₀-C(CH₃)₂-C₆H₁₀)ₙ-NH-C=O-]ₙ((CH₂)₃Si(CH₃)₂-OH)₂ mit einem Zahlenmittel Mₙ von ca. 1000 bis 300000,
[O-CH₂-CH(CH₃)O-C=O-NH-(C₆H₁₀-C(CH₃)₂-C₆H₁₀)ₙ-NH-C=O-]ₙ((CH₂)Si-(CH₃)₂-OH)₂ mit einem Zahlenmittel Mₙ von ca. 1000 bis 300000,
[O-CH₂-CH₂O-C=O-NH-(C₆H₁₀-C(CH₃)₂-C₆H₁₀)ₙ-NH-C=O-]ₙ((CH₂)Si(CH₃)₂-OH)₂ mit einem Zahlenmittel Mₙ von ca. 1000 bis 300000,
HO[Si(CH₃)₂-O]ₙH mit einer Viskosität von 10 bis 2000000 mPas bei 25°C,
HO[Si(CH₃)₂-O]ₙ[Si(CH₃)(CH=CH₂)-O]ₒH mit einer Viskosität von 10 bis 2000000 mPas bei 25°C,
[(CH₂-CH=CH-CH₂)ₙ]((CH₂)₃Si(CH₃)₂-OH)₂ mit einem Zahlenmittel Mₙ von ca. 500 bis 8000 und
[(CH₂-CH=CH-CH₂)ₙ]((CH₂)₃Si(CH₃)₂-OH)₂ mit einem Zahlenmittel Mₙ von ca. 500 bis 8000, wobei
HO[Si(CH₃)₂-O]ₙH mit einer Viskosität von 10 bis 2000000 mPas bei 25°C,
HO[Si(CH₃)₂-O]ₙ[Si(CH₃)(CH=CH₂)-O]ₒH mit einer Viskosität von 10 bis 2000000 mPas bei 25°C,
[(O-CH₂-CH(CH₃)O)ₙ]((CH₂)₃Si(CH₃)₂-OH)₂ mit einem Zahlenmittel Mₙ von ca. 500 bis 30000,
[(O-CH₂-CH₂O)ₙ]((CH₂)₃Si(CH₃)₂-OH)₂ mit einem Zahlenmittel Mₙ von ca. 500 bis 30000,
[(O-CH₂-CH(CH₃)O)ₙ]((CH₂)Si(CH₃)₂-OH)₂ mit einem Zahlenmittel Mₙ von ca. 500 bis 30000 und
[(O-CH₂-CH₂O)ₙ]((CH₂)Si(CH₃)₂-OH)₂ mit einem Zahlenmittel Mₙ von ca. 500 bis 30000 bevorzugt sowie
HO[Si(CH₃)₂-O]ₙH mit einer Viskosität von 10 bis 2000000 mPas bei 25°C und HO[Si(CH₃)₂-O]ₙ[Si(CH₃)(CH=CH₂)-O]ₒH mit einer Viskosität von 10 bis 2000000 mPas bei 25°C besonders bevorzugt sind, wobei n und o jeweils ganze Zahlen von mindestens 1 darstellen, die so gewählt werden, dass die angegebenen Zahlenmittel bzw. Viskositäten erhalten werden.

Im dritten Schritt des erfindungsgemäßen Verfahrens wird Harnstoffverbindung der Formel (III), falls kein zweiter Schritt durchgeführt wird (Verfahrensvariante 1), bzw. deren Umsetzungsprodukt mit Wasser, falls der zweite Schritt durchgeführt wird (Verfahrensvariante 2), mit Verbindung der Formel (IV) umgesetzt.

Im dritten Schritt des erfindungsgemäßen Verfahrens wird die im ersten Schritt erhaltene Reaktionsmischung bzw. die im zweiten Schritt erhaltene Reaktionsmischung mit Verbindung der Formel (IV) auf beliebige und bisher bekannte Weise miteinander vermischt und reagieren gelassen.

Die erfindungsgemäße Umsetzung im dritten Schritt erfolgt bevorzugt bei einer Temperatur von 20 bis 200°C, besonders bevorzugt von 80 bis 150°C, und bei einem Druck von bevorzugt 1 bis 800 hPa, besonders bevorzugt von 5 bis 200 hPa. Die Umsetzung kann mit Hilfe von dem Fachmann bekannten sauren oder basischen Katalysatoren, wie Ameisensäure, Phosphornitrilchlorid oder Ammoniumhydroxid, durchgeführt werden.

Die erfindungsgemäß hergestellten Siloxan-Copolymere können nun nach beliebigen, bisher bekannten Verfahren von gegebenenfalls noch vorhandenen Edukten bzw. gegebenenfalls eingesetzten Lösungsmittel bzw. Katalysatoren befreit werden, wie z.B. durch Destillation oder Extraktion.

Die im erfindungsgemäßen Verfahren eingesetzten Komponenten sind handelsübliche Produkte bzw. können nach in der Chemie gängigen Methoden hergestellt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren kontinuierlich oder diskontinuierlich durchgeführt werden, wobei die kontinuierliche Verfahrensweise bevorzugt ist.

Die erfindungsgemäße Verfahrensvariante 1 ist dadurch gekennzeichnet, dass
in einem ersten Schritt
ein Organyloxysilan der Formel (I) mit einem Isocyanat der Formel (II) zu einer Harnstoffverbindung der Formel (III) umgesetzt wird und
in einem weiteren Schritt
Harnstoffverbindung der Formel (III) mit einer silanolterminierten Verbindung der Formel (IV) gegebenenfalls in Anwesenheit eines Katalysators zu Copolymeren umgesetzt wird.

Die erfindungsgemäße Verfahrensvariante 2 ist dadurch gekennzeichnet, dass
in einem ersten Schritt
ein Organyloxysilan der Formel (I) mit einem Isocyanat der Formel (II) zu einer Harnstoffverbindung der Formel (III) umgesetzt wird,
in einem zweiten Schritt
die Harnstoffverbindung der Formel (III) mit Wasser umgesetzt wird und
in einem dritten Schritt
das Umsetzungsprodukt der Harnstoffverbindung der Formel (III) erhalten aus dem zweiten Schritt gegebenenfalls in Anwesenheit eines Katalysators mit einer silanolterminierten Verbindung der Formel (IV) zu Copolymeren umgesetzt wird.

Im weiteren Schritt der erfindungsgemäßen Verfahrensvariante 1 wird die im ersten Schritt erhaltene Harnstoffverbindung der Formel (III) mit Verbindung der Formel (IV) bevorzugt bei einer Temperatur von 20 bis 200°C, besonders bevorzugt von 80 bis 150°C, und bei einem Druck von bevorzugt 1 bis 800 hPa, besonders bevorzugt von 5 bis 200 hPa, bevorzugt in etwa stöchiometrischem Verhältnis der hydrolysierbaren Gruppen in (III) und der Silanolgruppen in (IV) unter Abspaltung von R⁷OH mit R⁷ gleich der obengenannten Bedeutung umgesetzt. Das im ersten Verfahrensschritt gegebenenfalls verwendete Lösemittel muss dabei nicht vorher entfernt werden.

Der weitere Schritt der erfindungsgemäßen Verfahrensvariante 1 kann mit Hilfe von dem Fachmann bekannten sauren oder basischen Katalysatoren, wie Ameisensäure oder Ammoniumhydroxid, durchgeführt werden, was jedoch nicht bevorzugt ist.

Bei der erfindungsgemäßen Verfahrensvariante 1 werden bevorzugt Copolymere des Typs (SiR¹₂-R⁶-NR²- (C=O)-NH-R³-NH-(C=O)-NR²-R⁶-SiR¹₂-O-SiR⁴₂-R⁵-SiR⁴₂-O)ₙ, besonders bevorzugt (Si(CH₃)₂-(CH₂)₃-NH-(C=O)-NH-R³-NH-(C=O)-NH-(CH₂)₃-(Si(CH₃)₂-O)₃₀₋₅₀)ₙ, erhalten, wobei R¹ bis R⁶ eine der obengenannten Bedeutungen haben und n eine ganze Zahl von mindestens 1, bevorzugt eine ganze Zahl von mindestens 20, besonders bevorzugt eine ganze Zahl von mindestens 50, ist.

Vorzugsweise haben die erfindungsgemäß nach Verfahrensvariante 1 hergestellten Copolymere eine Viskosität von 50 bis 5000 Pas bei 150°C.

Im dritten Schritt der erfindungsgemäßen Verfahrensvariante 2 wird das im zweiten Schritt erhaltene Umsetzungsprodukt der Harnstoffverbindung der Formel (III) mit Verbindung der Formel (IV) bevorzugt bei einer Temperatur von 20 bis 200°C, besonders bevorzugt von 80 bis 150°C, und bei einem Druck von bevorzugt 1 bis 800 hPa, besonders bevorzugt von 5 bis 200 hPa, unter Abspaltung von Wasser umgesetzt. Das im ersten Verfahrensschritt gegebenenfalls verwendete Lösemittel bzw. ein Wasserüberschuss aus der Hydrolyse der zweiten Stufe muss nicht vorher entfernt werden. Die Umsetzung kann mit Hilfe von, dem Fachmann bekannten sauren oder basischen Katalysatoren, wie Ameisensäure, Phosphornitrilchlorid oder Ammoniumhydroxid, durchgeführt werden. Das stöchiometrische Verhältnis der Reaktanden kann frei gewählt werden und ist bevorzugt in etwa 1.

Bei der erfindungsgemäßen Verfahrensvariante 2 werden bevorzugt Copolymere des Typs (SiR¹₂-R⁶-NR²-(C=O)-NH-R³-NH-(C=O)-NR²-R⁶-SiR¹₂O)ₘ(SiR⁴₂-R⁵-SiR⁴₂-O)ₙ, besonders bevorzugt (Si(CH₃)₂-(CH₂)₃-NH-(C=O)-NH-R³-NH-(C=O)-NH-(CH₂)₃-Si(CH₃)₂-O)ₘ((Si(CH₃)₂-O)₃₀₋₅₀)ₙ erhalten, wobei die Polymerblöcke statistisch verteilt sein können, R¹ bis R⁶ eine der obengenannten Bedeutungen haben und m und n jeweils unabhängig voneinander eine ganze Zahl von mindestens 1, bevorzugt eine ganze Zahl von mindestens 20, besonders bevorzugt eine ganze Zahl von mindestens 50, ist.

Vorzugsweise haben die erfindungsgemäß nach Verfahrensvariante 2 hergestellten Copolymere eine Viskosität von 50 bis 5000 Pas bei 150°C.

Die erfindungsgemäßen Copolymere können für alle Zwecke eingesetzt werden, für die auch bisher Siloxan-Harnstoff-Copolymere eingesetzt wurden. Insbesondere eignen sie sich als Additiv bei der Kunststoffverarbeitung (z.B. Extrusion, Spritzguss, Faserspinnen), als funktionelles Additiv in anderen Kunststoffen, als thermoplastische Werkstoffe, die durch Extrusion, Coextrusion und Spritzguss zu Profilen, Folien und Bauteilen verarbeitet werden können, in Lösung oder Dispersion zur Beschichtung von Oberflächen aller Art, wie Kunststoffen, Metallen, Holz oder Textilien.

Das erfindungsgemäße Verfahren hat den Vorteil, dass es einfach in der Durchführung ist und viele mögliche Blockcopolymere mit großer Variabilität hergestellt werden können.

Ferner hat das erfindungsgemäße Verfahren den Vorteil, dass es eine einfache Steuerung der Copolymereigenschaften, wie z.B. Rheologie, Thermoplastizität und Elastizität, ermöglicht.

Des Weiteren hat die erfindungsgemäße Verfahrensvariante 1 den Vorteil, dass Copolymere wohldefiniert hergestellt werden können.

Die erfindungsgemäße Verfahrensvariante 2 hat den Vorteil, dass durch die freie Wahl der Stöchiometrie der Copolymerblöcke die Eigenschaften optimal eingestellt werden können.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanden bei Raumtemperatur ohne zusätzliche Heizung oder Kühlung einstellt, durchgeführt. Alle in den Beispielen angeführten Viskositätsangaben sollen sich auf eine Temperatur von 25°C beziehen.

Zugfestigkeit, Reißdehnung und Spannungswert bei 100% Dehung (Modul) wurden nach DIN 53504 (Ausgabe Mai 1994) an Probekörpern der Form S2 bestimmt.

### Beispiel 1

40,2 Gew.-Teile Silan der Formel (C₆H₁₁)NH-CH₂-Si(CH₃)₂-OCH₃ werden bei 0°C in 20 Gew.-Teilen Tetrahydrofuran (THF) mit 26,2 Gew.-Teilen Dicyclohexylmethan-4,4'-diisocyanat umgesetzt. Nach 30 Minuten ist mit IR-Spektroskopie kein Isocyanat mehr nachweisbar. Das THF wird im Vakuum entfernt, und es wird ein farbloser Feststoff erhalten. 22,1 Gew.-Teile des so erhaltenen Feststoffs werden mit 200 Gew.-Teilen eines silanolterminierten Polydimethylsiloxans der mittleren Molmasse (Zahlenmittel) 3000 in einem IKA-Laborkneter bei 200 mbar und 150°C eine Stunde geknetet und dabei von entstehendem Methanol befreit. Es wird eine farblose, thermoplastische Masse erhalten. Diese wird in einer Presse bei 170°C zu einer 2 mm dicken Platte gepresst und davon mechanische Eigenschaften bestimmt. Zugfestigkeit: 2,2 MPa, Reißdehnung: 150%, Spannungswert bei 100% Dehnung: 2,5 MPa.

### Beispiel 2

40,2 Gew.-Teile Silan der Formel (C₆H₁₁)NH-CH₂-Si(CH₃)₂-OCH₃ werden bei 0°C in 20 Gew.-Teilen Tetrahydrofuran (THF) mit 26,2 Gew.-Teilen Dicyclohexylmethan-4,4'-diisocyanat umgesetzt. Nach 30 Minuten ist mit IR-Spektroskopie kein Isocyanat mehr nachweisbar. Das THF wird im Vakuum entfernt, und es wird ein farbloser Feststoff erhalten. 22,1 Gew.-Teile des so erhaltenen Feststoffs werden mit 200 Gew.-Teilen eines silanolterminierten Polydimethylsiloxans der mittleren Molmasse (Zahlenmittel) 3000 und 1,2 Gew.-Teilen ameisensaurem Wasser (0,01 Gew.-Teile 98%ige Ameisensäure) in einem IKA-Laborkneter bei 200 mbar und 150°C eine Stunde geknetet und dabei von entstehendem Methanol befreit. Es wird eine farblose, thermoplastische Masse erhalten. Diese wird in einer Presse bei 170°C zu einer 2 mm dicken Platte gepresst und davon mechanische Eigenschaften bestimmt. Zugfestigkeit: 2,8 MPa, Reißdehnung: 210%, Spannungswert bei 100% Dehnung: 3,2 MPa.

### Beispiel 3

4020 g/h des Silans der Formel (C₆H₁₁)NH-CH₂-Si(CH₃)₂-OCH₃ werden bei 80°C in den ersten Sektor (Länge L/D=4) eines gleichläufigen W&P-Doppelschneckenextruders (25 mm Schneckendurchmesser, L/D = 40) dosiert. 2620 g/h Dicyclohexylmethan-4,4'-diisocyanat werden bei 140°C im zweiten Sektor dosiert. 6000 g/h eines silanolterminierten Polydimethylsiloxans der mittleren Molmasse (Zahlenmittel) 3000 werden im dritten Sektor dosiert (160°C). Die restlichen Sektoren werden auf 180°C gehalten, im vorletzten Sektor wird mit 100 mbar evakuiert. Es wird ein farbloser, thermoplastischer Extrudatstrang erhalten, der in einem Wasserbad abgekühlt und danach granuliert wird. Das Granulat wird in einer Presse bei 170°C zu einer 2 mm dicken Platte gepresst und davon mechanische Eigenschaften bestimmt. Zugfestigkeit: 3,6 MPa, Reißdehnung: 260%, Spannungswert bei 100% Dehnung: 3,4 MPa.

### Beispiel 4

40,2 Gew.-Teile Silan der Formel (C₆H₁₁)NH-CH₂-Si(CH₃)₂-OCH₃ werden bei 0°C in 20 Gew.-Teilen Tetrahydrofuran (THF) mit 26,2 Gew.-Teilen Dicyclohexylmethan-4,4'-diisocyanat umgesetzt. Nach 30 Minuten ist mit IR-Spektroskopie kein Isocyanat mehr nachweisbar. Das THF wird im Vakuum entfernt, und es wird ein farbloser Feststoff erhalten. 22,1 Gew.-Teile des so erhaltenen Feststoffs werden mit 1,2 Gew.-Teilen ameisensaurem Wasser (0,01 Gew.-Teile 98%ige Ameisensäure) in einem IKA-Laborkneter bei 1013 mbar und 80°C 30 Minuten geknetet. Die so erhaltene Reaktionsmischung wird mit 200 Gew.-Teilen eines silanolterminierten Polydimethylsiloxans der mittleren Molmasse (Zahlenmittel) 3000 bei 200 mbar und 150°C eine Stunde geknetet und dabei von entstehendem Methanol befreit. Es wird eine farblose, thermoplastische Masse erhalten. Diese wird in einer Presse bei 170°C zu einer 2 mm dicken Platte gepresst und davon mechanische Eigenschaften bestimmt. Zugfestigkeit: 2,7 MPa, Reißdehnung: 220%, Spannungswert bei 100% Dehnung: 3,2 MPa.

## Patentansprüche

1. Verfahren zur Herstellung von Siloxan-Copolymeren, **dadurch**
**gekennzeichnet, dass**
in einem ersten Schritt
ein Organyloxysilan der Formel
R⁷O-SiR¹ ₂-R⁶-NHR² (I)
mit einem Isocyanat der Formel
R³(NCO)ₓ (II)
zu einer Harnstoffverbindung der Formel
R³(NH-(C=O)-NR²-R⁶-SiR¹ ₂-OR⁷)ₓ (III)
umgesetzt wird, wobei
R¹ gleich oder verschieden sein kann und einen einwertigen, gegebenenfalls substituierten Kohlenwasserstoffrest bedeutet, der mit Heteroatomen unterbrochen sein kann,
R² Wasserstoffatom oder einen einwertigen, gegebenenfalls substituierten Kohlenwasserstoffrest bedeutet, der mit Heteroatomen unterbrochen sein kann,
R³ einen mehrwertigen, gegebenenfalls substituierten Kohlenwasserstoffrest bedeutet, der mit Heteroatomen unterbrochen sein kann,
R⁶ einen zweiwertigen Kohlenwasserstoffrest bedeutet, der mit Heteroatomen unterbrochen sein kann,
R⁷ einen einwertigen, gegebenenfalls substituierten Kohlenwasserstoffrest bedeutet, der mit Heteroatomen unterbrochen sein kann,
x eine ganze Zahl größer 1 bedeutet,
gegebenenfalls in einem zweiten Schritt
die Harnstoffverbindung der Formel (III) mit Wasser umgesetzt wird und
in einem dritten Schritt
Harnstoffverbindung der Formel (III) und/oder deren Umsetzungsprodukt erhalten aus dem zweiten Schritt mit einer silanolterminierten Verbindung der Formel
R⁵ (SiR⁴ ₂-OH)_{y} (IV)
zu Copolymeren umgesetzt wird,
wobei
R⁴ gleich oder verschieden sein kann und eine für R¹ angegebene Bedeutung hat,
R⁵ einen mehrwertigen Polyetherrest, Polyesterrest oder Polysiloxanrest bedeutet und
y eine ganze Zahl größer 1 ist.

2. Verfahren gemäß Anspruch 1, **dadurch gekennzeichnet, dass** im ersten Schritt Isocyanat der Formel (II) in Mengen von 0,9 bis 1,1 Moläquivalenten Isocyanatgruppen zu Amingruppen des Silans der Formel (I) eingesetzt wird.

3. Verfahren gemäß Anspruch 1 oder 2, **dadurch gekennzeichnet, dass** die Umsetzung im ersten Schritt bei einer Temperatur von 0 bis 80°C und dem Druck der umgebenden Atmosphäre, also zwischen 900 und 1100 hPa, erfolgt.

4. Verfahren gemäß einem oder mehreren der Ansprüche 1 bis 3, **dadurch gekennzeichnet, dass** im gegebenenfalls durchgeführten zweiten Schritt die im ersten Schritt erhaltene Harnstoffverbindung der Formel (III) mit Wasser in stöchiometrischem Verhältnis zu der Menge der hydrolysierbaren Gruppen oder im Überschuss unter Freisetzung von Verbindung R⁷OH mit R⁷ gleich der obengenannten Bedeutung umgesetzt wird.

5. Verfahren gemäß einem oder mehreren der Ansprüche 1 bis 4, **dadurch gekennzeichnet, dass** die Hydrolyse in der zweiten Stufe bei einer Temperatur von 0 bis 80°C und dem Druck der umgebenden Atmosphäre, also zwischen 900 und 1100 hPa, erfolgt.

6. Verfahren gemäß einem oder mehreren der Ansprüche 1 bis 5, **dadurch gekennzeichnet, dass** die Umsetzung im dritten Schritt bei einer Temperatur von 20 bis 200°C und einem Druck von 1 bis 800 hPa erfolgt.

7. Verfahren gemäß Anspruch 1, **dadurch gekennzeichnet, dass** nach Verfahrensvariante 1
in einem ersten Schritt
ein Organyloxysilan der Formel (I) mit einem Isocyanat der Formel (II) zu einer Harnstoffverbindung der Formel (III) umgesetzt wird und
in einem weiteren Schritt
Harnstoffverbindung der Formel (III) mit einer silanolterminierten Verbindung der Formel (IV) gegebenenfalls in Anwesenheit eines Katalysators zu Copolymeren umgesetzt wird.

8. Verfahren gemäß Anspruch 1, **dadurch gekennzeichnet, dass** nach Verfahrensvariante 2
in einem ersten Schritt
ein Organyloxysilan der Formel (I) mit einem Isocyanat der Formel (II) zu einer Harnstoffverbindung der Formel (III) umgesetzt wird,
in einem zweiten Schritt
die Harnstoffverbindung der Formel (III) mit Wasser umgesetzt wird und
in einem dritten Schritt
das Umsetzungsprodukt der Harnstoffverbindung der Formel (III) erhalten aus dem zweiten Schritt gegebenenfalls in Anwesenheit eines Katalysators mit einer silanolterminierten Verbindung der Formel (IV) zu Copolymeren umgesetzt wird.

## Claims

1. Process for preparing siloxane copolymers,
**characterized in that**
in a first step
an organyloxysilane of the formula
R⁷O-SiR¹ ₂-R⁶-NHR² (I)
is reacted with an isocyanate of the formula
R³(NCO)ₓ (II)
to form a urea compound of the formula
R³(NH-(C=O)-NR²-R⁶-SiR¹ ₂-OR⁷)ₓ (III)
where
the radicals R¹ can be identical or different and are each a monovalent, substituted or unsubstituted hydrocarbon radical which may be interrupted by heteroatoms,
R² is a hydrogen atom or a monovalent, substituted or unsubstituted hydrocarbon radical which may be interrupted by heteroatoms,
R³ is a polyvalent, substituted or unsubstituted hydrocarbon radical which may be interrupted by heteroatoms,
R⁶ is a divalent hydrocarbon radical which may be interrupted by heteroatoms,
R⁷ is a monovalent, substituted or unsubstituted hydrocarbon radical which may be interrupted by heteroatoms,
x is an integer greater than 1,
if desired in a second step
the urea compound of the formula (III) is reacted with water and
in a third step
the urea compound of the formula (III) and/or its reaction product obtained from the second step is reacted with a silanol-terminated compound of the formula
R⁵(SiR⁴ ₂-OH)_{y} (IV)
to form a copolymer,
where
the radicals R⁴ can be identical or different and each have one of the meanings given for R¹,
R⁵ is a polyvalent polyether radical, polyester radical or polysiloxane radical and
y is an integer greater than 1.

2. Process according to Claim 1, **characterized in that** the isocyanate of the formula (II) is used in amounts of from 0.9 to 1.1 molar equivalents of isocyanate groups to amine groups of the silane of the formula (I) in the first step.

3. Process according to Claim 1 or 2, **characterized in that** the reaction in the first step is carried out at a temperature of from 0 to 80°C and at the pressure of the surrounding atmosphere, i.e. in the range from 900 to 1100 hPa.

4. Process according to one or more of Claims 1 to 3, **characterized in that**, in the optional second step, the urea compound of the formula (III) obtained in the first step is reacted with water in a stoichiometric ratio to the amount of hydrolyzable groups or in excess to liberate compound R⁷OH, where R⁷ is as defined above.

5. Process according to one or more of Claims 1 to 4, **characterized in that** the hydrolysis in the second step is carried out at a temperature of from 0 to 80°C and at the pressure of the surrounding atmosphere, i.e. in the range from 900 to 1100 hPa.

6. Process according to one or more of Claims 1 to 5, **characterized in that** the reaction in the third step is carried out at a temperature of from 20 to 200°C and at a pressure of from 1 to 800 hPa.

7. Process according to Claim 1, **characterized in that**, according to process variant 1,
in a first step
an organyloxysilane of the formula (I) is reacted with an isocyanate of the formula (II) to form a urea compound of the formula (III) and
in a further step
the urea compound of the formula (III) is reacted with a silanol-terminated compound of the formula (IV) in the presence or absence of a catalyst to form copolymers.

8. Process according to Claim 1, **characterized in that**, according to process variant 2,
in a first step
an organyloxysilane of the formula (I) is reacted with an isocyanate of the formula (II) to form a urea compound of the formula (III),
in a second step
the urea compound of the formula (III) is reacted with water and
in a third step
the reaction product of the urea compound of the formula (III) obtained from the second step is reacted in the presence or absence of a catalyst with a silanol-terminated compound of the formula (IV) to form copolymers.

## Revendications

1. Procédé pour la préparation de copolymères de siloxane, **caractérisé en ce que**,
dans une première étape, un organyloxysilane de formule
R⁷O-SiR¹ ₂-R⁶-NHR² (I)
est transformé avec un isocyanate de formule
R³ (NCO)ₓ (II)
en un composé de type urée de formule
R³(NH-(C=O)-NR²-R⁶-SiR¹ ₂-OR⁷)ₓ (III)
où
R¹ peut être identique ou différent et signifie un radical hydrocarboné monovalent, le cas échéant substitué, qui peut être interrompu par des hétéroatomes,
R² signifie un atome d'hydrogène ou un radical hydrocarboné monovalent, le cas échéant substitué, qui peut être interrompu par des hétéroatomes,
R³ signifie un radical hydrocarboné polyvalent, le cas échéant substitué, qui peut être interrompu par des hétéroatomes,
R⁶ signifie un radical hydrocarboné divalent, qui peut être interrompu par des hétéroatomes,
R⁷ signifie un radical hydrocarboné monovalent, le cas échéant substitué, qui peut être interrompu par des hétéroatomes,
x signifie un nombre entier supérieur à 1,
le cas échéant, dans une deuxième étape
le composé de type urée de formule (III) est transformé avec de l'eau et
dans une troisième étape
le composé de type urée de formule (III) et/ou son produit de transformation obtenu dans la deuxième étape est transformé en copolymères avec un composé terminé par silanol de formule
R⁵(SiR⁴ ₂-OH)_{y} (IV)
où
R⁴ peut être identique ou différent et a une signification indiquée pour R¹,
R⁵ signifie un radical polyéther, polyester ou polysiloxane polyvalent et
y est un nombre entier supérieur à 1.

2. Procédé selon la revendication 1, **caractérisé en ce qu'**on utilise dans la première étape l'isocyanate de formule (II) en des quantités de 0,9 à 1,1 équivalent en mole de groupes isocyanate par rapport aux groupes amino du silane de formule (I).

3. Procédé selon la revendication 1 ou 2, **caractérisé en ce que** la transformation dans la première étape est réalisée à une température de 0 à 80°C et à une pression de l'atmosphère environnante, c'est-à-dire entre 900 et 1 100 hPa.

4. Procédé selon l'une ou plusieurs des revendications 1 à 3, **caractérisé en ce que** dans la deuxième étape réalisée le cas échéant, le composé de type urée de formule (III) obtenu dans la première étape est transformé avec de l'eau dans un rapport stoechiométrique par rapport à la quantité des groupes hydrolysables ou en excès avec libération du composé R⁷OH avec R⁷ ayant la signification susmentionnée.

5. Procédé selon l'une ou plusieurs des revendications 1 ou 4, **caractérisé en ce que** l'hydrolyse dans la deuxième étape est réalisée à une température de 0 à 80°C et à une pression de l'atmosphère environnante, c'est-à-dire entre 900 et 1 100 hPa.

6. Procédé selon l'une ou plusieurs des revendications 1 ou 5, **caractérisé en ce que** la transformation dans la troisième étape est réalisée à une température de 20 à 200°C et à une pression de 1 à 800 hPa.

7. Procédé selon la revendication 1, **caractérisé en ce que**, selon la variante de procédé 1
dans une première étape, un organyloxysilane de formule (I) est transformé avec un isocyanate de formule (II) en un composé de type urée de formule (III) et
dans une autre étape
le composé de type urée de formule (III) est transformé en copolymères avec un composé terminé par silanol de formule (IV), le cas échéant en présence d'un catalyseur.

8. Procédé selon la revendication 1, **caractérisé en ce que**, selon la variante de procédé 2
dans une première étape, un organyloxysilane de formule (I) est transformé avec un isocyanate de formule (II) en un composé de type urée de formule (III),
dans une deuxième étape
le composé de type urée de formule (III) est transformé avec de l'eau et
dans une troisième étape
le produit de transformation du composé de type urée de formule (III) obtenu dans la deuxième étape est transformé en copolymères avec un composé terminé par silanol de formule (IV), le cas échéant en présence d'un catalyseur.
